# EUROPÄISCHE PATENTSCHRIFT

(11) **EP 3 424 759 B1**
(45) Veröffentlichungstag und Bekanntmachung des Hinweises auf die Patenterteilung: **05.10.2022**
(21) Anmeldenummer: 18163119.3
(22) Anmeldetag: 21.03.2018
(51) Int. Cl.: B60H 1/00, B62D 33/06, B60H 3/06

(54) **KABINENDACH EINER KABINE FÜR EIN LANDWIRTSCHAFTLICHES ARBEITSFAHRZEUG**
CABIN CANOPY FOR AN AGRICULTURAL WORK VEHICLE
TOIT D'UNE CABINE POUR UN VÉHICULE DE TRAVAIL AGRICOLE

(30) Priorität: 06.07.2017 DE 102017115125
(43) Veröffentlichungstag der Anmeldung: 09.01.2019
(73) Patentinhaber: CLAAS Selbstfahrende Erntemaschinen GmbH, 33428 Harsewinkel (DE)
(72) Erfinder: BEHNKE, Alexander, 33378 Rheda- Wiedenbrück (DE); DEPPE, Markus, 33790 Halle/Westf. (DE); DANNIGKEIT, Florian, 33428 Harsewinkel (DE)
(74) Vertreter: CLAAS Gruppe

(56) Entgegenhaltungen:
- EP-A2- 1 306 249
- WO-A1-2016/147135
- CA-A- 1 176 907
- US-B1- 6 231 630
- US-B2- 7 334 834

## Beschreibung

Die vorliegende Erfindung betrifft ein Kabinendach einer Kabine für ein landwirtschaftliches Arbeitsfahrzeug gemäß dem Oberbegriff des Anspruches 1 sowie eine Kabine für ein landwirtschaftliches Arbeitsfahrzeug mit einem Kabinendach gemäß dem Oberbegriff des Anspruches 15.

Aus der EP 2 291 327 A2 sind ein Kabinendach sowie eine Kabine für ein landwirtschaftliches Arbeitsfahrzeug der eingangs genannten Art bekannt. Das Kabinendach weist an einer Seite einen Abschnitt mit daran angeordnete Luftzufuhröffnungen auf, die der Ansaugung von Luft dienen. Den Abschnitt sind ein Vorfilter sowie zumindest ein Ansaugkanal nachgeordnet. Bei dem als Filterelement ausgeführten Vorfilter kann es sich um einen so genannten Taschenfilter handeln. Das Filterelement wird in einem hierfür im Inneren des Kabinendaches vorgesehenen Aufnahmeabschnitt angeordnet und durch separate Fixiermittel wie beispielsweise federbelastete Schrauben oder dergleichen lösbar befestigt. Aufgrund der Gesamthöhe der Kabine ist die Zugänglichkeit des Kabinendaches zu Wartungszwecken, wie beispielsweise dem Austausch des Filterelementes, mit einem nicht unerheblichen Aufwand verbunden, da überwiegend oberhalb des Kopfes hantiert werden muss. Zudem ist dadurch die Einsehbarkeit in den Aufnahmeabschnitt sehr eingeschränkt, was das Anbringen der Fixierelemente zur Befestigung des Filterelementes erschwert.

Die Schriften EP 1 306 249 A2, US 7 334 834 B2, CA 1 176 907 A und WO 2016/147135 A1 beschreiben weitere bekannte Kabinendächer mit Filtern.

Vor diesem Hintergrund stellt sich der vorliegenden Erfindung die Aufgabe, ein Kabinendach der eingangs genannten Art weiterzuentwickeln, welches eine ergonomischere Durchführung von Wartungstätigkeiten ermöglicht.

Diese Aufgabe wird erfindungsgemäß durch ein Kabinendach gemäß den Merkmalen des Anspruches 1 sowie eine Kabine gemäß Anspruch 15 gelöst.

Die Luftbehandlungsvorrichtung kann als so genannte HVAC-Einheiten ausgebildet sein, das heißt als Heizungs-Ventilations-Klima-Einheiten, zu der auch Filterelemente sowie Gebläse gehören.

Um die Durchführung von Wartungstätigkeiten an einem Kabinendach ergonomischer zu gestalten, wird gemäß dem Anspruch 1 vorgeschlagen, dass in einem Abschnitt der umlaufenden Seitenwand zumindest ein abnehmbares Abdeckelement angeordnet ist, welches den sich zwischen der Unterschale und der Oberschale erstreckenden Aufnahmeabschnitt für zumindest ein Filterelement verschließt, wobei das Abdeckelement mit sich abschnittsweise in das Innere des Kabinendachs erstreckenden Stegen ausgeführt ist, die der Fixierung des zumindest einen Filterelementes dienen. Das zumindest eine Filterelement wird zunächst in den dafür vorgesehenen Aufnahmeabschnitt eingeführt. Im Anschluss daran wird das Abdeckelement aufgesetzt, wobei die sich abschnittsweise in das Innere des Kabinendachs erstreckenden Stege an einem äußeren Rahmen des zumindest einen Filterelementes abstützen. Es sind zumindest zwei Paar Stege in Längsrichtung des Abdeckelementes zueinander beabstandet angeordnet. Das Abdeckelement ist so ausgeformt, dass es bei korrekter Positionierung des Filterelementes bündig mit dem Kabinendach abschließt. Somit führt eine Fehlstellung des eingesetzten Filterelementes dazu, dass sich wegen der am Rahmen des Filterelementes abstützenden Stegen das Abdeckelement nicht bündig abschließend am Kabinendach befestigen lässt. Die Stege ermöglichen einen Verzicht auf die im Stand der Technik üblichen Befestigungsmittel wie Schrauben oder dergleichen, die von einer Bedienperson nach dem Einsetzen der Filterelemente angeordnet werden müssen. Somit lässt sich bei einer Fehlstellung des Filterelementes dieses einfach erneut entnehmen und wieder einsetzen. Der Aufwand für den Filteraustausch wird erheblich reduziert. Das Überkopfarbeiten aufgrund der Höhe des Kabinendaches wird vereinfacht.

Bevorzugt kann an dem die Luftzufuhröffnungen aufweisenden Abschnitt der umlaufenden Seitenwand ein außenseitig an der Kabine positionierbares Filterbauteil mittels einer formschlüssigen Verbindung werkzeuglos anbringbar sein. Ein solches, insbesondere als Filterschlauch ausgeführtes, Filterbauteil dient der Vorfiltration von großen Schmutzpartikeln vor dem Auftreffen der Frischluft auf ein Feinfilterelement und führt somit zu einer Verlängerung der Standzeit des nachgeordneten Filterelementes auch bei extremer Belastung der Frischluft mit Staub und großen Partikeln. Dabei bedarf es der regelmäßigen Wartung bzw. Entleerung des Filterbauteiles. Das hierfür erforderliche Demontieren und Montieren des Filterbauteiles am Kabinendach wird durch die werkzeuglos lösbare formschlüssige Verbindung ergonomischer durchführbar.

Hierzu kann an dem Abschnitt ein zur Kabinendachoberseite hin offen ausgeführtes Aufnahmeelement angeordnet sein, in welches ein endseitig an dem Filterschlauch angeordnetes flanschförmiges Anschlusselement von oben formschlüssig einführbar ist. Eine Bedienperson muss zum Demontieren und Montieren den Filterschlauch lediglich in vertikaler Richtung bewegen, um das Anschlusselement am Filterschlauch aus dem Aufnahmeelement herauszubewegen bzw. einzuführen.

Bevorzugt kann hierbei die Verbindung zwischen dem Aufnahmeelement und dem Anschlusselement als Schwalbenschwanzverbindung ausgebildet sein. Durch die jeweilige Formgebung von Aufnahmeelement und Anschlusselement bei der Schwalbenschanzverbindung lässt sich das Einführen des Anschlusselementes erleichtern.

Insbesondere kann zur Sicherung der formschlüssigen Verbindung zwischen dem Aufnahmeelement und dem Anschlusselement an dem Kabinendach ein schwenkbar angeordnetes Dachseitenelement angeordnet sein. Das Dachseitenelement ist relativ zu der umlaufenden Seitenwand nach oben wegschwenkbar. In seiner ersten Stellung erstreckt sich das Dachseitenelement im Wesentlichen parallel zum Kabinendach. In dieser ersten Stellung überdeckt das Dachseitenelement das obenseitig offene Aufnahmeelement und verhindert, dass das Anschlusselement sich aufgrund von Stößen oder Bewegungen in vertikaler Richtung aus seiner formschlüssigen Verbindung lösen kann. Zu Wartungszwecken wird das Dachseitenelement in eine im Wesentlichen zum Kabinendach senkrechte zweite Stellung überführt. Dadurch kann das obenseitig offene Aufnahmeelement freigegeben werden.

Eine bevorzugte Weiterbildung der Erfindung sieht vor, dass auf der Rückseite des Kabinendachs in der umlaufenden Seitenwand eine Aussparung angeordnet ist, welche durch einen austauschbaren, mit zumindest einer Durchtrittsöffnung versehenen, Wandeinsatz verschließbar ist. Der Wandeinsatz kann als Leitungsdurchführung ausgebildet sein. Vorteilhaft ist es, dass der Wandeinsatz an eine Verwendung des Kabinendachs für Kabinen unterschiedlicher landwirtschaftlicher Arbeitsfahrzeuge durch einen Austausch anpassbar ist. Zur Anpassung an für verschiedene Arbeitsfahrzeuge spezifische Leitungsstrukturen ist lediglich der Austausch des Wandeinsatzes im Kabinendach notwendig. Die Kabinenstruktur wird dadurch unabhängiger vom Typ der landwirtschaftlichen Arbeitsfahrzeuge.

Dabei kann der Wandeinsatz mit der Oberfläche der umlaufenden Seitenwand bündig abschließen.

Bevorzugt kann der Wandeinsatz form- und/oder kraftschlüssig mit dem Kabinendach lösbar verbunden sein.

Gemäß einer weiteren Ausführung kann zwischen der Unterschale und der Oberschale zumindest ein hohlzylindrischer Abschnitt mit geschlossener Mantelfläche angeordnet sein, dessen in die Unterschale mündende offen ausgeführte Grundfläche durch eine Lautsprechermembran verschließbar ist. Der hohlzylindrische Abschnitt im Kabinendach bildet einen Resonanzkörper, der durch den Einbau dichtend verschlossen wird. Der Querschnitt der hohlzylindrischen Abschnitte kann voneinander abweichen. Dabei kann der Querschnitt beispielsweise im Wesentlichen kreisförmig, oder quaderförmig ausgeführt sein. Die gewählte Querschnittsform orientiert sich am zur Verfügung stehenden Bauraum.

Insbesondere kann das Volumen des holzylindrischen Abschnitts durch ein Volumenbegrenzungselement veränderbar sein. Beispielsweise können Schiebeklappen vorgesehen sein, durch welche das Volumen des holzylindrischen Abschnitts reduziert wird, um das Klangbild zu beeinflussen.

Eine bevorzugte Weiterbildung sieht vor, dass das in den Aufnahmeabschnitt des Kabinendaches einbringbare zumindest eine Filterelement als auswechselbares Modul ausgebildet ist. Die Ausführung des zumindest einen Filterelementes als austauschbares Modul ermöglich den einfachen Wechsel zwischen Filterelementen unterschiedlicher Kategorien. So kann anstelle eines einfachen Staubfilters beispielsweise ein Filter der Kategorie 4 zum Filtern von Spritzmittel eingebaut werden. Filter darunter liegender Kategorien sind selbstverständlich gleichfalls einbaubar. Die äußere Kontur des zumindest einen Filterelementes ist dabei stets identisch, um es in den dafür vorgesehenen Aufnahmeabschnitt des Kabinendaches wechselweise einbringen zu können.

Dabei kann im Kabinendach eine separate Gebläseeinheit angeordnet sein, die in Abhängigkeit vom Typ des eingesetzten modularen Filterelementes steuer- oder regelbar ist. Bei einem Einsatz eines Filters der Kategorie 4, d.h. einem Aktivkohlefilter, ist der Betrieb der zusätzlichen Gebläseeinheit sinnvoll, um die Frischluftzufuhr in hinreichendem Umfang zu gewährleisten.

Weiterhin kann die Oberschale gegenüber der Unterschale an einer Seite einen sich über die Breite des Kabinendaches erstreckenden flächigen Überstand aufweisen, welcher sich gegenüber der Unterschale durch zumindest zwei beabstandet zueinander angeordnete Profilelemente an dieser abstützt. Durch die Profilelemente bleibt die Tragfähigkeit des Kabinendaches auch im Bereich des Überstandes erhalten, so dass auch dieser Teil des Kabinendaches durch eine Person erforderlichenfalls begehbar ist.

Bevorzugt können die Profilelemente im Wesentlichen tetraederförmig oder als 3D-Rippen ausgebildet sein. Durch die im Wesentlichen tetraeder- bzw. dreieckspyramidenförmige Ausbildung der Profilelemente lässt sich bei geringerem Gewicht eine höhere Festigkeit erreichen.

Weiterhin wird die eingangs gestellte Aufgabe durch eine Kabine für ein landwirtschaftliches Arbeitsfahrzeug mit einem Kabinendach gelöst, wobei das Kabinendach nach einem der Ansprüche 1 bis 14 ausgeführt ist.

Die vorliegende Erfindung wird nachstehend anhand von in den Zeichnungen dargestellten Ausführungsbeispielen näher erläutert.

Es zeigen:
- Fig. 1: ein als landwirtschaftlicher Traktor ausgebildetes Arbeitsfahrzeug;
- Fig. 2: eine Ansicht eines Kabinendaches eines Arbeitsfahrzeuges von unten;
- Fig. 3: eine Längsschnittansicht entlang der Linie A-A gemäß Fig. 2 des Kabinendaches;
- Fig. 4: eine Teilansicht X gemäß Fig. 2 auf eine Unterschale;
- Fig. 5: eine perspektivische Ansicht eines Ausschnitts B gemäß Fig. 2 des Kabinendaches;
- Fig. 6: eine Teilschnittansicht des Kabinendaches entlang der Linie E-E gemäß Fig. 2mit einem Aufnahmeabschnitt für einen Luftfilter;
- Fig. 7: eine perspektivische Ansicht eines den Aufnahmeabschnitt verschließenden erfindungsgemäßen Abdeckelementes;
- Fig. 8: eine Teilansicht des Kabinendaches von schräg hinten mit einem zu montierenden Filterschlauch;
- Fig. 9: eine Teilansicht des Kabinendaches 23 von schräg hinten mit montiertem Filterschlauch;
- Fig. 10: eine perspektivische Teilansicht D gemäß Fig. 2 des Kabinendaches von schräg hinten mit einem Wandeinsatz;
- Fig. 11: eine perspektivische Teilansicht D gemäß Fig. 2 des Kabinendaches von schräg hinten mit einem Wandeinsatz gemäß einer weiteren Ausführungsform;
- Fig. 12: eine perspektivische Teilansicht des Kabinendaches von schräg unten;
- Fig. 13: eine Teilansicht des Kabinendaches im Längsschnitt entlang der Linie E-E gemäß Fig. 2;
- Fig. 14: eine perspektivische Teilansicht des Kabinendaches von der Seite;
- Fig. 15: eine perspektivische Ansicht der Kabine von schräg unten;
- Fig. 16: eine perspektivische Teilansicht auf die Unterschale von oben.

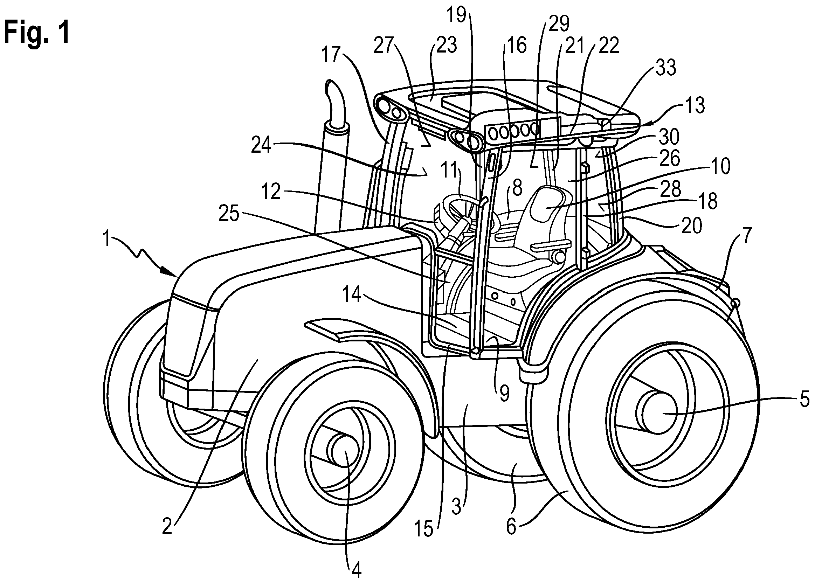

In der Figur 1 ist ein als landwirtschaftlicher Traktor 1 ausgebildetes Arbeitsfahrzeug dargestellt, welches in Blockbauweise ausgebildet ist. Dabei ist ein Motorgehäuse 2 einer Brennkraftmaschine des Traktors 1 mit einem Getriebe- und Hinterachsgehäuse 3 verbunden. In seinem Frontbereich weist der Traktor 1 eine Vorderachse 4 auf, die über ein nicht näher dargestelltes Vorderachsgehäuse am Motorgehäuse 2 befestigt ist. Im Heckbereich des Traktors 1 gehen von dem Getriebe- und Hinterachsgehäuse 3 zwei Radachsen aus, von denen in der Darstellung nach der Figur 1 nur eine Radachse 5 sichtbar ist. Die Radachsen treiben dabei Hinterräder 6 an, die beidseitig des Traktors 1 über einen Teil ihres Außenumfangs von Kotflügeln 7 und 8 abgedeckt sind, wobei die Kotflügel 7 und 8 gemeinsam mit einem Fahrerstand 9 ausgebildet sein können. Auf diesem Fahrerstand 9, der gemeinsam mit den Kotflügeln 7 und 8 ausgebildet ist, sind unter anderem ein Fahrersitz 10, eine Lenkeinrichtung 11 sowie eine Anzeige- und Bedieneinheit 12 angeordnet. Es liegt im Rahmen der Erfindung, dass es sich bei dem Arbeitsfahrzeug auch um einen selbstfahrenden Mähdrescher oder Feldhäcksler sowie um ein sonstiges land-, forstwirtschaftliches oder kommunales Nutzfahrzeug mit einer Kabine handeln kann.

Eine Fahrerkabine 13 des Traktors 1 bildet mit dem Fahrerstand 9 eine Einheit, die gegenüber dem sie tragenden Getriebe- und Hinterachsgehäuse 3 über nicht näher dargestellte Elemente federnd bzw. schwingungsdämpfend gelagert ist. Daher wird von dem Fahrerstand 9 ein Kabinenboden 14 gebildet, und untere Rahmenteile 15 der Fahrerkabine 13 umschließen zum Teil den Kabinenboden 14 und sind in anderen Bereichen oberhalb der Kotflügel 7 und 8 geführt. Von den unteren Rahmenteilen 15 gehen im Frontbereich der Fahrerkabine 13 im Wesentlichen vertikal verlaufende A-Säulen 16 und 17 aus, zu denen beabstandet B-Säulen 18 und 19 und schließlich am Heck der Fahrerkabine 13 hintere Säulen 20 und 21 verlaufen.

Die Säulen 16 bis 21 sind an ihren oberen Enden über obere Rahmenteile 22 miteinander verbunden, wobei diese oberen Rahmenteile 22 umlaufend ausgebildet sind und ein als vorkonfektioniertes Modul ausgeführtes Kabinendach 23 aufnehmen. Wie weiterhin aus der Figur 1 hervorgeht, ist die Fahrerkabine 13 rundherum verglast, d. h., sie weist eine Frontscheibe 24 und von dieser durch Querrahmen abgetrennte, im Fußraum befindliche vordere Frontscheibenteile 25 auf. Weiterhin ist auf beiden Seiten der Fahrerkabine 1 jeweils eine verglaste Kabinentür 26 und 27 vorgesehen, die, wie aus der perspektivischen Darstellung hervorgeht, jeweils schwenkbar an der B-Säule 18 bzw. 19 gelagert ist und an die entsprechende A-Säule 16 bzw. 17 anschlägt. Hinter den verglasten Kabinentüren 26 und 27 befinden sich zwischen der jeweiligen B-Säule 18 bzw.19 und der entsprechenden hinteren Säule 20 bzw. 21 Seitenfenster 28 und 29. Schließlich ist die Fahrerkabine 13 auf ihrer Heckseite, also in dem zwischen den hinteren Säulen 20 und 21 liegenden Bereich durch eine Heckscheibe 30 verschlossen, die zur Verbesserung der Sicht auf im Heckbereich der Kabine 13 angebaute Arbeitsgeräte bis an den Kabinenboden 14 reichen kann.

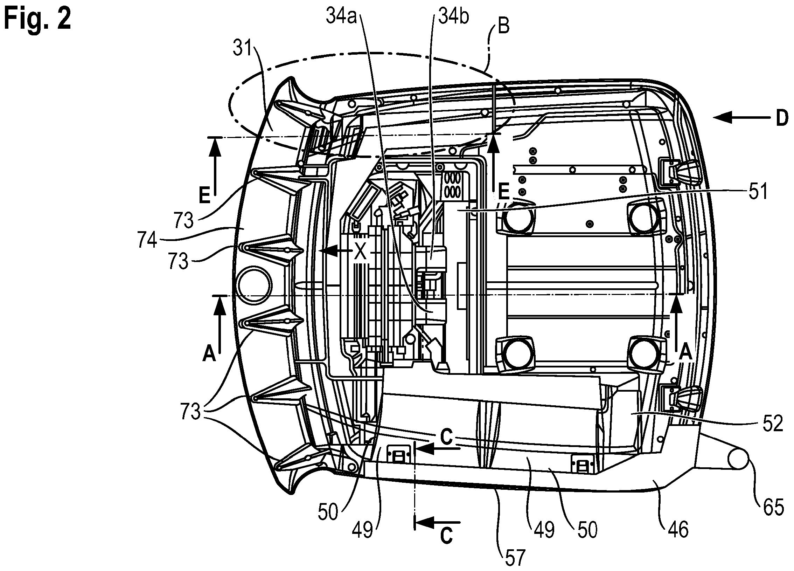

Fig. 2 zeigt das Kabinendach 23 in einer Ansicht von unten, wobei zur besseren Veranschaulichung eine das Kabinendach 23 begrenzende Oberschale 32 transparent dargestellt ist.

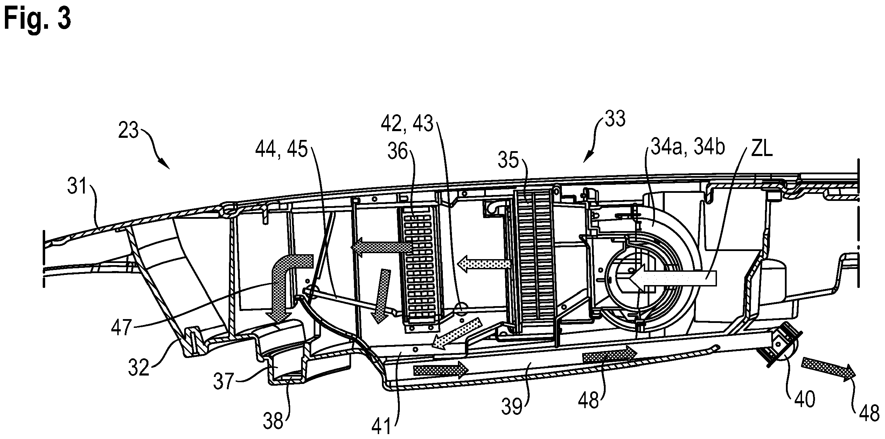

In Fig. 3 ist eine Längsschnittansicht des Kabinendaches 23 entlang der Linie A-A gemäß der Fig. 2 dargestellt. Das Kabinendach 23 umfasst zumindest zwei Schalen, eine Oberschale 31 und eine Unterschale 32. In der dargestellten Ausführungsform ist zwischen der Oberschale 31 und der Unterschale 32 eine Luftbehandlungsvorrichtung 33 angeordnet. Eine hiervon abweichende Anordnung einer Luftbehandlungsvorrichtung ist denkbar, beispielsweise im Bereich außerhalb des Kabinendaches 23. Die Luftbehandlungsvorrichtung 33 weist zumindest ein Gebläse 34a bzw. 34b, eine Kühlvorrichtung 35 sowie eine Heizvorrichtung 36 auf. Vorzugsweise sind zwei Gebläse 34a, 34b vorgesehen, die der Kühlvorrichtung 35 einen Zuluftstrom ZL zuführen. Fig. 3 zeigt eine Ansicht des Kabinendaches 23 von oben, wobei die Oberschale 31 transparent dargestellt ist. Der Zuluftstrom ZL wird, wie in Fig. 3 angedeutet, durch einen Ansaugkanals 46 angesaugt und den Gebläsen 34a, 34b zugeführt. Der Zuluftstrom ZL durchströmt die Kühlvorrichtung 35 und gelangt im Anschluss zu der hierzu beabstandet angeordneten Heizvorrichtung 36. Zwischen der Kühlvorrichtung 35 und der Heizvorrichtung 36 ist ein erster Bypass 42 angeordnet. Der Bypass 42 weist ein als Klappe 43 ausgeführtes Strömungsbegrenzungselement auf. In einer einfacheren Ausführung des ersten Bypasses 42 kann der abzuzweigende Volumenstrom gekühlter Zuluft durch zumindest ein Strömungsbegrenzungselement begrenzbar sein, welches als Blende oder Drossel ausgebildet ist. Der nicht durch den ersten Bypass 42 abgezweigte Volumenstrom gekühlter Zuluft durchströmt die Heizvorrichtung 36. Der Heizvorrichtung 36 ist ein zweiter Bypass 44 nachgeordnet. Der zweite Bypass 44 ist als eine Klappe 45 ausgeführt. Der aus der Heizvorrichtung 36 austretende, am zweiten Bypass 44 vorbeigeführte Volumenstrom bildet einen ersten Luftstrom 47, welcher einem ersten Luftverteilkanal 37 zugeführt wird. Der erste Luftverteilkanal 37 weist einen im Wesentlichen U-förmigen Verlauf auf. Dabei verlaufen näherungsweise parallele Teilabschnitte des ersten Luftverteilkanals 37 zumindest abschnittsweise in Längsrichtung der Kabine 13 zwischen der jeweiligen A-Säule 16 bzw. 17 und der jeweiligen B-Säule 18 bzw.19 oder der entsprechenden hinteren Säule 20 bzw. 21. Ein quer verlaufender Teilabschnitt des ersten Luftverteilkanals 37 erstreckt sich im Bereich der Frontscheibe 24 im Wesentlichen über die Breite der Kabine 13. Der erste Luftverteilkanal 37 weist erste Luftaustrittsöffnungen 38 auf. Aus den ersten Luftaustrittsöffnungen 38 tritt der im Wesentlichen entlang der Frontscheibe 24 strömende, nach unten gerichtete erste Luftstrom 47 aus.

Der hinter der Kühlvorrichtung 35 durch den ersten Bypass 42 abgezweigte Teilvolumenstrom gelangt, unter Umgehung der Heizvorrichtung 36, in eine hinter der Heizvorrichtung 35 befindliche Mischzone 41. In diese Mischzone 41 wird ein von dem zweiten Bypass 44 abgezweigter Teilvolumenstrom des von der Heizvorrichtung 36 erwärmten Zuluftstromes ZL eingeleitet. Die beiden Teilvolumenströme bilden einen zweiten Luftstrom 48 der einem zweiten Luftverteilkanal 39 zugeführt wird. Der zweite Luftverteilkanal 39 weist zweite Luftaustrittsöffnungen 40 auf, die in das Innere der Kabine 13 münden. Aus den zweiten Luftaustrittsöffnungen 40 tritt der in Richtung des Fahrersitzes 10 gerichtete zweite Luftstrom 48 aus.

Zwischen dem ersten Luftstrom 47 und dem zweiten Luftstrom 48 besteht eine Temperarturdifferenz, wobei der erste Luftstrom 47 eine höhere Temperatur aufweist, als der zweite Luftstrom 48. Dies hat den Effekt, dass der zweite Luftstrom 48 zum einen der Entfrostung zumindest der Frontscheibe 24 dienen kann sowie der Zuführung wärmer Luft im Bereich des Kabinenbodens 14 als im höher liegenden Bereich des Fahrersitzes 10. Bevorzugt liegt die Temperaturdifferenz zwischen dem zweiten Luftstrom 48 bei Austritt aus den zweiten Luftaustrittsöffnungen und dem ersten Luftstrom 47 bei Erreichen des Kabinenbodens 14 in einem Bereich, welcher im Allgemeinen durch eine Bedienperson ohne technische Hilfsmittel wahrnehmbar ist. Auf diese Weise wird eine Temperaturverteilung in der Kabine 13 erzielt, die von einer Bedienperson als besonders angenehm empfunden wird. Sowohl die Klappe 43 als auch die Klappe 45 können beispielsweise temperaturabhängig angesteuert werden, um die abgezweigten Teilvolumenströme, die zu dem zweiten Luftstrom 48 zusammengeführt werden, zu verändern.

Durch den Ansaugkanal 46 wird von den Gebläsen 34a, 34b der Zuluftstrom ZL angesaugt, welcher zumindest einem als Luftfilter 49 ausgebildeten Filterelement zugeführt wird, wie in Fig. 2 dargestellt. Der oder die Luftfilter 49 sind in Aufnahmeabschnitten 50 im Kabinendach 23 angeordnet. Die Luftfilter 49 sind als Taschenfilter ausgeführt. Anstelle der Taschenfilter sind auch Filterelemente der Kategorie 4 in die Aufnahmeabschnitte 50 einsetzbar, welche zur Anwendung kommen müssen, wenn mit dem Arbeitsfahrzeug 1 beispielsweise Spritzmittel ausgebracht werden sollen. Im Wesentlichen quer zur Frontscheibe 25 ist ein Umluftfilter 51 liegend angeordnet. Der Umluftfilter 51 filtriert aus der Kabine 13 angesaugte Luft, bevor diese erneut der Luftbehandlungsvorrichtung 33 als Umluft zugeführt wird.

Benachbart zu dem Ansaugkanal 46 ist eine Entlüftungsklappe 52 angeordnet, welche das Innere der Kabine 13 mit dem Ansaugkanal 46 strömungstechnisch verbindet. Die Entlüftungsklappe 52 ist nur einseitig betätigbar und öffnet bei einem im Inneren der Kabine 13 schlagartig auftretenden Überdruck, welcher durch das Zuschlagen der Kabinentür 26 hervorgerufen wird. Der durch die Entlüftungsklappe 52 entweichende Luftstrom gelangt durch den Ansaugkanal 46 zu den Luftfiltern 49. Die schlagartig auftretende Luftdruckdifferenz versetzt die Luftfilter 49 in Bewegung bzw. Schwingung. Auf diese Weise lässt sich ein Reinigungseffekt erzielen, indem an den Wänden der Luftfilter 49 abgelagerte Partikel durch die Bewegung abgelöst werden. Zugleich dient der Ansaugkanal 46 der Entlüftung.

Weiterhin zeigt die Darstellung in Fig. 2, dass die Oberschale 31 gegenüber der transparent dargestellten Unterschale 32 an einer Seite einen sich über die Breite des Kabinendaches 23 erstreckenden flächigen Überstand 74 aufweist. Der Überstand 74 stützt sich gegenüber der Unterschale 32 durch zumindest zwei beabstandet zueinander angeordnete Profilelemente 73 an dieser ab. Zur Verringerung des Gewichts bei gleichzeitiger Erhaltung oder Verbesserung der Stabilität sind die Profilelemente 73 im Wesentlichen tetraederförmig oder als 3D-Rippen ausgeführt.

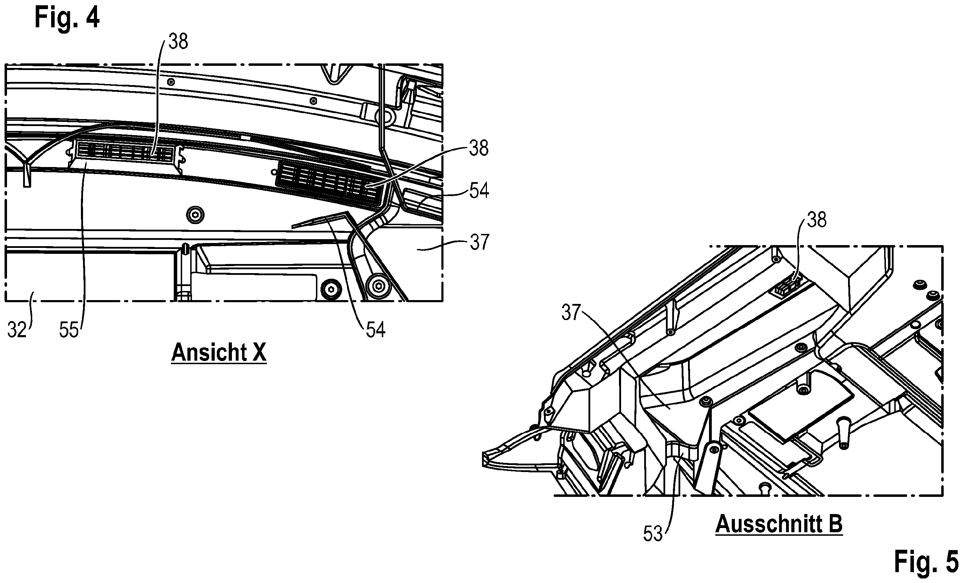

Aufgrund der nur einseitigen Ansaugung des Zuluftstromes ZL wird von dem Gebläse 34a, welches dem Ansaugkanal 46 näherliegend angeordnet ist, anteilig mehr kalte Zuluft zugeführt, als dem zu dem Ansaugkanal 46 weiter beabstandeten Gebläse 34b. Um eine homogene Aufteilung des aus den ersten Luftaustrittsöffnungen 38 ausströmenden ersten Luftstromes 47 zu erreichen, sind zumindest in dem ersten Luftverteilkanal 37 Mittel zur strömungstechnischen Beeinflussung des ersten Luftstroms 47 vorgesehen, was in den Fig. 4 und 5 dargestellt ist. Dabei zeigt die Darstellung in Fig. 4 eine Detailansicht X gemäß Fig. 2. In Fig. 5 ist ein Ausschnitt B gemäß Fig. 2 dargestellt. Bei den Mitteln handelt es sich um Rippen 53, Prallwände 54, Winkel der Prallwände 54 bzw. der Seitenwände des ersten Luftverteilkanals 37 oder sonstige das Strömungsverhalten beeinflussende Bauteile wie ein teilweise offenes Gehäuse 55, welches die erste Luftaustrittsöffnung 38 abschnittsweise umschließt. Ebenso kommt eine Variation einzelner Querschnitte des ersten Luftverteilkanal 37 zur Strömungsbeeinflussung zum Tragen.

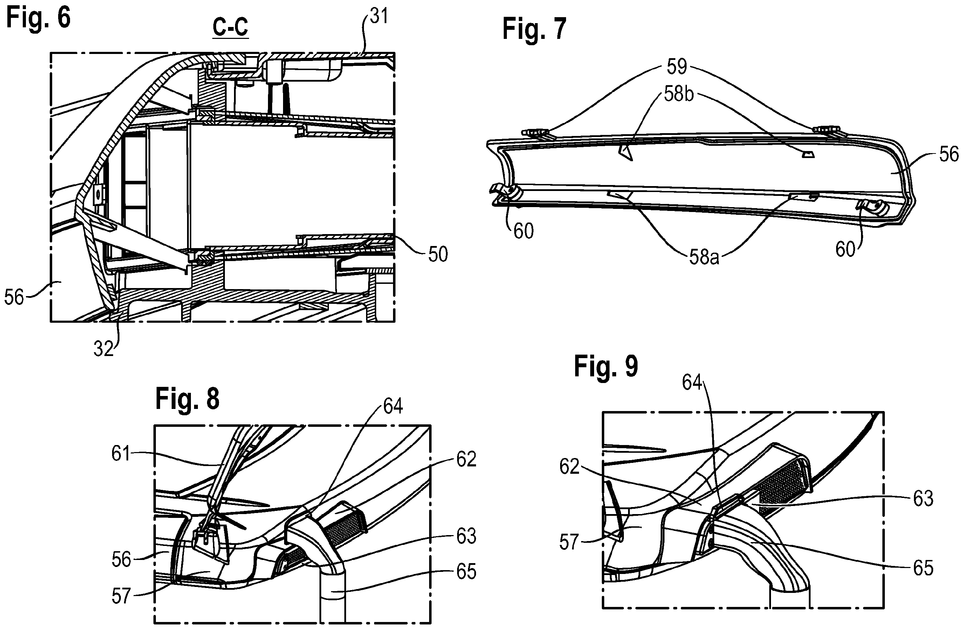

In Fig. 6 ist eine Teilschnittansicht des Kabinendaches 23 entlang der Linie C-C gemäß Fig. 2 dargestellt, welche den Aufnahmeabschnitt 50 für einen der Luftfilter 49 zeigt. Der Aufnahmeabschnitt 50 erstreckt sich im Wesentlichen waagerecht zwischen der Oberschale 31 und der Unterschale 32.

Fig. 7 zeigt ein Abdeckelement 56, welches den Aufnahmeabschnitt 50 verschließt. Das Abdeckelement 56 ist lösbar an einer zwischen der Oberschale 31 und der Unterschale 32 ausgebildeten umlaufenden Seitenwand 57 angeordnet. In montierter Position schließt das Abdeckelement 56 bündig mit der umlaufenden Seitenwand 57 ab. Das Abdeckelement 56 weist zu seiner Befestigung an der Oberschale 31 Befestigungsabschnitte 59 auf, welche ein Hochschwenken des Abdeckelementes 56 in Richtung der Oberschale 31 ermöglichen. Zur lösbaren Verbindung des Abdeckelementes 56 mit der Unterschale 32 sind Befestigungselemente 60 vorgesehen. Das Abdeckelement 56 weist auf seiner Innenseite zumindest zwei Paar Stege 58a, 58b auf, die sich abschnittsweise in Richtung des Aufnahmeabschnittes 50 erstrecken. Die Stege 58a, 58b eines Paares weisen vorzugsweise unterschiedliche Längen auf, welches der nachgewölbten Kontur des Abdeckelementes 56 geschuldet ist. Die Länge der Stege 58a, 58b ist so bemessen, dass bei in den Aufnahmeabschnitt 50 eingebautem Luftfilter 49 sich die Stege 58a, 58b am Rahmen des Luftfilters 49 abstützen und diesen in dem Aufnahmeabschnitt 50 fixieren, wobei zugleich das Abdeckelement 56 bündig mit der umlaufenden Seitenwand 57 abschließt. Wurde das Filterelement 49 nicht korrekt in den Aufnahmeabschnitt 50 eingesetzt, führt das dazu, dass das Abdeckelement 56 nicht bündig mit der umlaufenden Seitenwand 57 abschließen kann.

In den Fig. 8 und 9 ist eine Teilansicht des Kabinendaches 23 von schräg hinten dargestellt. An der umlaufenden Seitenwand 57 ist ein Dachseitenelement 61 schwenkbar angelenkt, welches sich aus einer zur Oberschale 31 im Wesentlichen parallelen Position in eine unter einem Winkel zur Oberschale 31 geneigte Position überführen lässt. Letztere geneigte Position des Dachseitenelementes 61 ist in Fig. 8 dargestellt. An der Rückseite des Kabinendaches 23 weist die umlaufende Seitenwand 57 einen Abschnitt 62 mit Luftzufuhröffnungen 62a auf, an welchen sich der Ansaugkanal 46 anschließt. An dem Abschnitt 62 ist ein zur Oberseite des Kabinendaches 23 hin offen ausgeführtes Aufnahmeelement 63 angeordnet. In das Aufnahmeelement 63 ist ein endseitig an einem Filterschlauch 65 angeordnetes flanschförmiges Anschlusselement 64 von oben formschlüssig einführbar. Der außenseitig an der Kabine 13 angeordnete Filterschlauch 65 dient der Vorfiltration von großen Schmutzpartikeln aus der angesaugten Luft, wodurch die Standzeit der Luftfilter 49 verlängert wird. Hierzu ist die formschlüssige Verbindung zwischen dem Aufnahmeelement 63 und dem Anschlusselement 64 als Schwalbenschwanzverbindung ausgebildet. Die Bedienperson muss für das Anschließen bzw. das Lösen des Filterschlauches 65 lediglich das Dachseitenelement 61 hochschwenken und kann anschließend das Anschlusselement 64 in vertikaler Richtung in das Aufnahmeelement 63 einführen bzw. hinausschieben. Das heruntergeschwenkte Dachseitenelement 61 verhindert in montierter Position des Filterschlauches 65 das Hinausgleiten des Anschlusselementes 64 aus dem Aufnahmeelement 63.

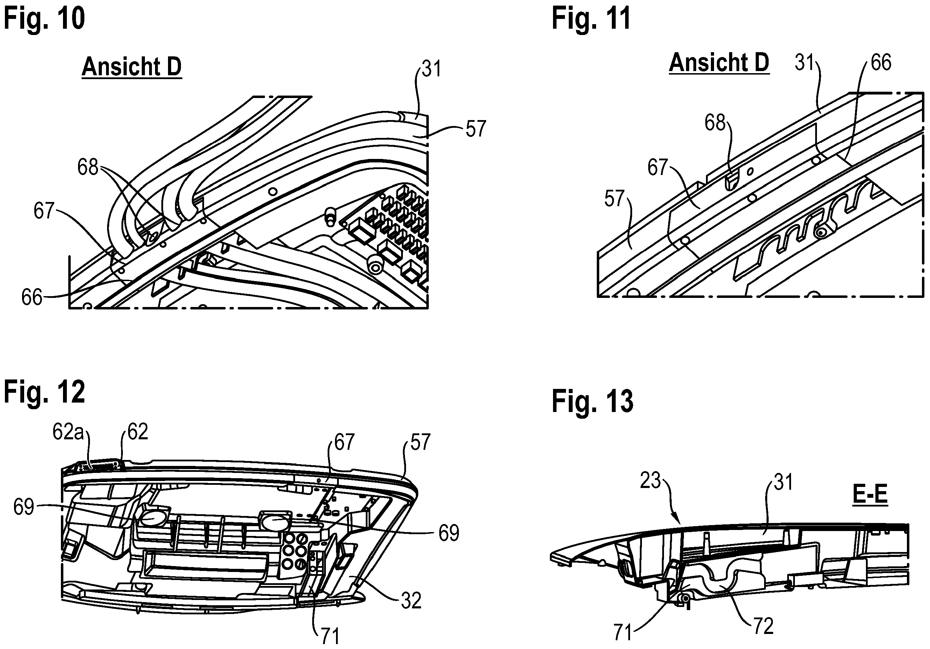

In den Fig. 10 und 11 ist eine perspektivische Teilansicht D gemäß Fig. 2 des Kabinendaches 23 von hinten dargestellt. In der umlaufenden Seitenwand 57 ist eine Aussparung 66 angeordnet. Die Aussparung 66 ist für Kabinendächer 23 bzw. Kabinen 13, die für unterschiedliche Arbeitsfahrzeuge 1, wie zum Bespiel Traktoren, selbstfahrende Mähdrescher oder Feldhäcksler, verwendet werden sollen, einheitlich dimensioniert. In die Aussparung 66 wird ein mit zumindest einer Durchtrittsöffnung 68 versehener Wandeinsatz 67 eingebracht, welcher die Aussparung 66 verschließt. In Fig. 10 ist dabei eine erste Ausführungsform des Wandeinsatzes 67 mit mehreren Durchtrittsöffnungen 68 dargestellt. In Fig. 11 ist eine zweite Ausführungsform des Wandeinsatzes 67 mit nur einer Durchtrittsöffnung 68 dargestellt. Die Anzahl und Ausgestaltung der Durchtrittsöffnungen 68 des jeweiligen Wandeinsatzes 67 hängt vom jeweiligen Typ des Arbeitsfahrzeuges 1 ab.

In Fig. 12 ist eine perspektivische Teilansicht des Kabinendaches 23 von unten dargestellt. Zwischen der Unterschale 32 und der Oberschale 31 sind mehrere hohlzylindrische Abschnitte 69 mit geschlossener Mantelfläche angeordnet. Die hohlzylindrischen Abschnitte 69 können dabei identische oder voneinander abweichende Querschnittsformen aufweisen. Eine in die Unterschale 32 mündende offen ausgeführte Grundfläche 70 des jeweiligen hohlzylindrischen Abschnittes 69 ist durch eine nicht dargestellte Lautsprechermembrane dichtend verschließbar. Die jeweils durch die Lautsprechermembrane verschlossenen hohlzylindrischen Abschnitte 69 bilden einen Resonanzkörper aus. Die Volumina der hohlzylindrischen Abschnitte 69 können jeweils durch ein Volumenbegrenzungselement veränderbar sein. Weiterhin zeigt die Darstellung in Fig. 12, dass das Innere der Kabine 13 durch einen im Kabinendach 23 angeordneten Entlüftungskanal 71 mit der Umgebung strömungstechnisch permanent verbunden ist. Der Entlüftungskanal 71 weist einen Abschnitt 72 mit einem im Wesentlichen U-förmigen Verlauf auf, was in der Teilansicht des Kabinendaches 23 im Längsschnitt entlang der Linie E-E gemäß Fig. 2 in Fig. 13 näher dargestellt ist.

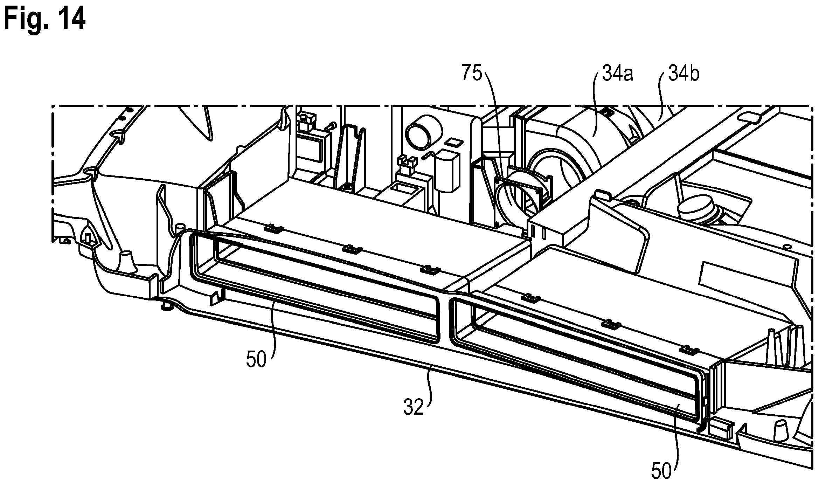

Die Darstellung in Fig. 14 zeigt eine perspektivische Teilansicht des Kabinendaches 23 von der Seite. Die Aufnahmeabschnitte 50 sind ohne eingesetzte Luftfilter 49 dargestellt. Durch den freien vorderen Aufnahmeabschnitt 50 lässt sich der Umluftfilter 51 nach außen herausziehen. Diese Anordnung hat den Vorteil, dass der Umluftfilter 51 nicht, wie im Stand der Technik üblich, nach innen in die Kabine entleert werden muss, sondern nach außen. Durch das Entnehmen des liegend angeordneten Umluftfilters 51 nach außen wird das Herausrieseln von Partikeln, die der Filter aufgenommen hat, vermieden.

Benachbart zu den Gebläsen 34a und 34b ist ein Zusatzgebläse 75 angeordnet. Das Zusatzgebläse 75 dient dazu, den bei einem Austausch der als Taschenfilter ausgeführten Luftfilter 49 durch Filterelemente, beispielsweise der Kategorie 4 oder darunterliegend, die von den Aufnahmeabschnitten 50 aufgenommen und dem Abdeckelement 56 in gleicher Weise fixiert werden, erhöhten Zuluftbedarf auszugleichen. Hierzu sind die unterschiedlichen Filterelemente als Module ausgebildet, die an die Aufnahmeabschnitte 50 angepasst sind, so dass eine einfache Auswechselbarkeit gegeben ist.

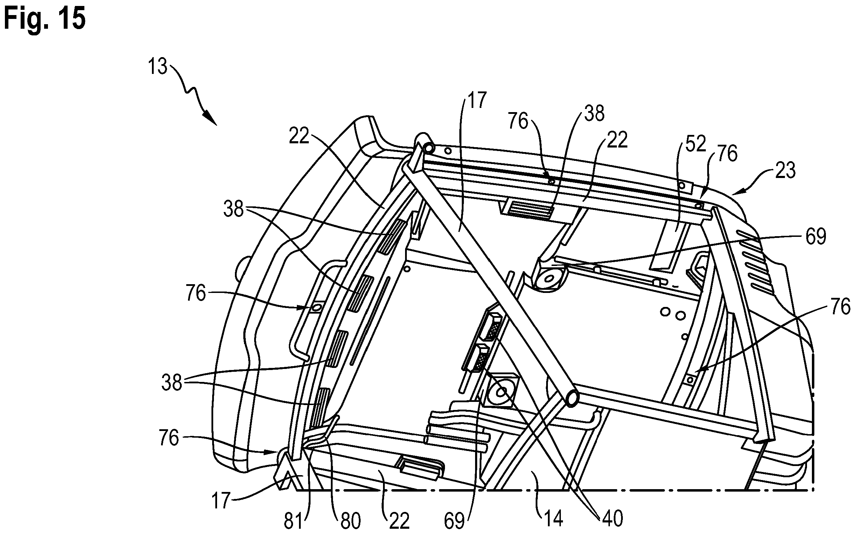

In Fig. 15 ist eine perspektivische Ansicht der Kabine 13 von schräg unten dargestellt. Das Kabinendach 23 ist als vorkonfektioniertes Modul ausgeführt, welches an der Rahmenstruktur der Kabine 13 anbringbar ist. Hierzu weisen die oberen umlaufend ausgebildeten Rahmenteile 22 mehrere Befestigungspunkte 76 auf, auf denen das vormontierte Kabinendach 23 aufsetzbar ist. Vormontiert bzw. vorkonfektioniert bedeutet, dass alle für den Betrieb der Luftbehandlungsvorrichtung 33 notwendigen Komponenten in einem vorgelagerten Fertigungsschritt zwischen der Oberschale 32 und der Unterschale 33 angeordnet worden sind. Die Unterschale 33 wird durch einen daran angeordneten Dachhimmel verkleidet.

Wie insbesondere aus der Fig. 15 zu entnehmen ist, sind die ersten Luftaustrittsöffnungen 38 und die zweiten Luftaustrittsöffnungen 40 ausschließlich im Kabinendach 23 verbaut. Dabei sind im Bereich der Frontscheibe 24 mehrere erste Luftaustrittsöffnungen 38 nebeneinander angeordnet. Diese geben den von oben nach unten gerichteten ersten Luftstrom 47 ab, der im Wesentlichen entlang der Fronscheibe 24 zum Kabinenboden 14 strömt, das heißt in den Fußbereich der Bedienperson strömt. Die oberhalb des Fahrersitzes 10 angeordneten zweiten Luftaustrittsöffnungen 40 geben den auf den Kopfbereich der Bedienperson gerichteten zweiten Luftstrom 48 ab. Wie bereits weiter oben ausgeführt, besteht zwischen dem wärmeren ersten Luftstrom 47 und dem kühleren zweiten Luftstrom 48 eine von der Bedienperson ohne Hilfsmittel wahrnehmbare Temperaturdifferenz, um eine für das Empfinden der Bedienperson angenehme Temperaturverteilung bzw. Temperaturschichtung zu erhalten.

Zur Beeinflussung der Temperaturverteilung lässt sich die Beimischung von durch die Kühlvorrichtung 35 gekühlter Zuluft mittels der Klappe 43 steuern. Die Klappe 43 kann durch einen Stellmotor verstellt werden, der wiederum durch einen zusätzlichen Temperatursensor ansteuerbar sein kann.

In der Unterschale oder der Oberschale des Kabinendachs ist zumindest eine Führungsnut 81 angeordnet, welche der abschnittsweisen formschlüssigen Aufnahme zumindest eines Schlauchs 80 zur Abführung von Kondensat dient. Die zumindest eine Führungsnut 81 ermöglicht es, den in eine A-Säule 17 der Rahmenstruktur mündenden Schlauch insbesondere im Übergangsbereich von dem Kabinendach in die A-Säule 17 knick- und stauchungsfrei zu führen. So wird dadurch die Vormontage vereinfacht, wobei bei der Montage des vorkonfektionierten Kabinendaches 23 auf der Rahmenstruktur durch die Führungsnut 81 verhindert wird, dass der Schlauch 80 beim Verbinden mit der A-Säule 17 abgeknickt wird, was einen Abfluss des Kondensats zumindest einschränkt.

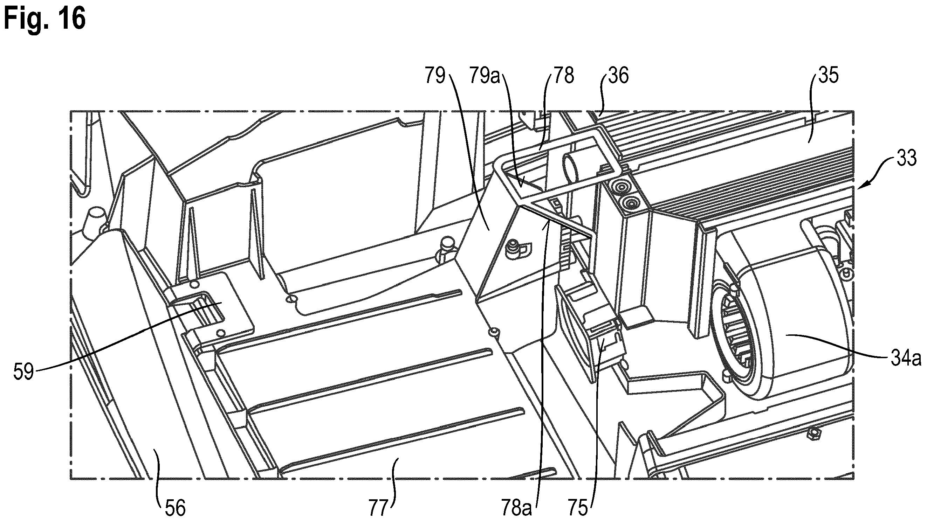

In Fig. 16 ist eine perspektivische Teilansicht auf die Unterschale 32 von oben dargestellt. Die Luftbehandlungsvorrichtung 33 weist zumindest einen Anschluss 77 auf, der mit einem korrespondierenden Gegenanschluss 78 verbunden ist. Der Gegenschluss 78 führt einen gekühlten Luftstrom einem in das Kabinendach 23 integrierten Dachkühlfach 76 zu. Der Anschluss 77 als auch der Gegenanschluss 78 weisen jeweils geneigte Anlageflächen 77a, 78a auf. Die Anlageflächen 77a und 78a sind zueinander komplementär ausgebildet, so dass das Einsetzen der Luftbehandlungsvorrichtung 33 zugleich zu einer dichtenden Verbindung des zumindest einen Anschlusses 77 mit dem Gegenanschluss 78 führt. Die Luftbehandlungsvorrichtung 33 kann im Bereich des ersten Luftverteilkanals 37 ebenfalls mit geneigten Anlageflächen ausgeführt sein, so dass auch hier eine Abdichtung bei der Montage der Luftbehandlungsvorrichtung 33 erreicht werden kann.

**Bezugszeichenliste**

| | | | |
|---|---|---|---|
| 1 | Traktor | 30 | Heckscheibe |
| 2 | Motorgehäuse | 31 | Oberschale |
| 3 | Getriebe- und Hinterachsge-häuse | 32 | Unterschale |
| 4 | Vorderachse | 33 | Luftbehandlungsvorrichtung |
| 5 | Radachse | 34a | Gebläse |
| 6 | Hinterrad | 34b | Gebläse |
| 7 | Kotflügel | 35 | Kühlvorrichtung |
| 8 | Kotflügel | 36 | Heizvorrichtung |
| 9 | Fahrerstand | 37 | Erster Luftverteilkanal |
| 10 | Fahrersitz | 38 | Erste Luftaustrittsöffnung |
| 11 | Lenkeinrichtung | 39 | Zweiter Luftverteilkanal |
| 12 | Bedieneinheit | 40 | Zweite Luftaustrittsöffnung |
| 13 | Fahrerkabine | 41 | Mischzone |
| 14 | Kabinenboden | 42 | Erster Bypass |
| 15 | Rahmenteil | 43 | Klappe |
| 16 | A-Säule | 44 | Zweiter Bypass |
| 17 | A-Säule | 45 | Klappe |
| 18 | B-Säule | 46 | Ansaugkanal |
| 19 | B-Säule | 47 | Erster Luftstrom |
| 20 | Hintere Säule | 48 | Zweiter Luftstrom |
| 21 | Hintere Säule | 49 | Luftfilter |
| 22 | Rahmenteil | 50 | Aufnahmeabschnitt |
| 23 | Kabinendach | 51 | Umluftfilter |
| 24 | Frontscheibe | 52 | Entlüftungsklappe |
| 25 | Frontscheibenteil | 53 | Rippe |
| 26 | Kabinentür | 54 | Prallwand |
| 27 | Kabinentür | 55 | Gehäuse |
| 28 | Seitenfenster | 56 | Abdeckelement |
| 29 | Seitenfenster | 57 | Seitenwand |
| 58a | Steg | ZL | Zuluftstrom |
| 58b | Steg | | |
| 59 | Befestigungsabschnitt | | |
| 60 | Befestigungselement | | |
| 61 | Dachseitenelement | | |
| 62 | Abschnitt | | |
| 62a | Luftzufuhröffnungen | | |
| 63 | Aufnahmeelement | | |
| 64 | Anschlusselement | | |
| 65 | Filterschlauch | | |
| 66 | Aussparung | | |
| 67 | Wandeinsatz | | |
| 68 | Durchtrittsöffnung | | |
| 69 | Hohlzylindrischer Abschnitt | | |
| 70 | Grundfläche von 69 | | |
| 71 | Entlüftungskanal | | |
| 72 | U-förmiger Abschnitt | | |
| 73 | Profilelement | | |
| 74 | Überstand | | |
| 75 | Zusatzgebläse | | |
| 76 | Befestigungspunkt | | |
| 77 | Dachkühlfach | | |
| 78 | Anschluss | | |
| 78a | Anlagefläche | | |
| 79 | Gegenanschluss | | |
| 79a | Anlagefläche | | |
| 80 | Schlauch | | |
| 81 | Führungsnut | | |

## Patentansprüche

1. Kabinendach (23) einer Kabine (13) für ein landwirtschaftliches Arbeitsfahrzeug (1), umfassend eine Unterschale (32) und eine Oberschale (31), zwischen denen eine umlaufende Seitenwand (57) ausgebildet ist, wobei an einer Seite des Kabinendachs (23) ein Abschnitt (62) zur Luftansaugung angeordnet ist, dem eine in dem Kabinendach (23) angeordnete Luftbehandlungsvorrichtung (33) nachgeordnet ist, wobei in einem Abschnitt der umlaufenden Seitenwand (57) zumindest ein abnehmbares Abdeckelement (56) angeordnet ist, welches einen sich zwischen der Unterschale (32) und der Oberschale (31) erstreckenden Aufnahmeabschnitt (50) für zumindest ein Filterelement (49) verschließt, wobei das Abdeckelement (56) in montierter Position bündig mit der umlaufenden Seitenwand (57) abschließt und zu seiner Befestigung an der Oberschale (31) Befestigungsabschnitte (59) aufweist, welche ein Hochschwenken des Abdeckelements (56) in Richtung der Oberschale (31) ermöglichen und lösbare Verbindung des Abdeckelementes (56) mit der Unterschale (32) Befestigungselemente (60) vorgesehen sind, **dadurch gekennzeichnet, dass** das Abdeckelement (56) mit sich abschnittsweise in das Innere des Kabinendaches (23) erstreckenden, paarweise angeordneten, Stegen (58a, 58b) ausgeführt ist, die der Fixierung des zumindest einen Filterelementes (49) dienen, wobei die Länge der Stege (58a, 58b) so bemessen ist, dass bei in den Aufnahmeabschnitt (50) eingebautem Luftfilter (49) sich die Stege (58a, 58b) am Rahmen des Luftfilters (49) abstützen und diesen in dem Aufnahmeabschnitt (50) fixieren.

2. Kabinendach (23) nach Anspruch 1, **dadurch gekennzeichnet, dass** an dem der Luftansaugung dienenden Abschnitt (62) der umlaufenden Seitenwand (57) ein außenseitig der Kabine (13) positioniertes Filterbauteil (65) mittels einer formschlüssigen Verbindung werkzeuglos anbringbar ist.

3. Kabinendach (23) nach Anspruch 2, **dadurch gekennzeichnet, dass** an dem Abschnitt (62) ein zur Kabinendachoberseite hin offen ausgeführtes Aufnahmeelement (63) angeordnet ist, in welches ein endseitig an dem Filterbauteil (65) angeordnetes flanschförmiges Anschlusselement (64) von oben formschlüssig einführbar ist.

4. Kabinendach (23) nach Anspruch 3, **dadurch gekennzeichnet, dass** die Verbindung zwischen dem Aufnahmeelement (63) und dem Anschlusselement (64) als Schwalbenschwanzverbindung ausgebildet ist.

5. Kabinendach (23) nach einem der Ansprüche 2 bis 4, **dadurch gekennzeichnet, dass** zur Sicherung der formschlüssigen Verbindung an dem Kabinendach (23) ein schwenkbar angeordnetes Dachseitenelement (61) angeordnet ist.

6. Kabinendach (23) nach einem der vorangehenden Ansprüche, **dadurch gekennzeichnet, dass** auf der Rückseite des Kabinendachs (23) in der umlaufenden Seitenwand (57) eine Aussparung (66) angeordnet ist, welche durch einen austauschbaren, mit zumindest einer Durchtrittsöffnung (68) versehenen, Wandeinsatz (67) verschließbar ist.

7. Kabinendach (23) nach Anspruch 6, **dadurch gekennzeichnet, dass** der Wandeinsatz (67) mit der Oberfläche der umlaufenden Seitenwand (57) bündig abschließt.

8. Kabinendach (23) nach einem der Ansprüche 6 oder 7, **dadurch gekennzeichnet, dass** der Wandeinsatz (67) form- und/oder kraftschlüssig mit dem Kabinendach (23) lösbar verbunden ist.

9. Kabinendach (23) nach einem der vorangehenden Ansprüche, **dadurch gekennzeichnet, dass** zwischen der Unterschale (32) und der Oberschale (31) zumindest ein hohlzylindrischer Abschnitt (69) mit geschlossener Mantelfläche angeordnet ist, dessen in die Unterschale (32) mündende offen ausgeführte Grundfläche (70) durch eine Lautsprechermembran verschließbar ist.

10. Kabinendach (23) nach Anspruch 9, **dadurch gekennzeichnet, dass** das Volumen des hohlzylindrischen Abschnitts (69) durch ein Volumenbegrenzungselement veränderbar ist.

11. Kabinendach (23) nach einem der vorangehenden Ansprüche, **dadurch gekennzeichnet, dass** das in den Aufnahmeabschnitt (50) des Kabinendaches (23) einbringbare zumindest eine Filterelement (49) als austauschbares Modul ausgebildet ist.

12. Kabinendach (23) nach Anspruch 11, **dadurch gekennzeichnet, dass** im Kabinendach (23) eine separate Gebläseeinheit (75) angeordnet ist, die in Abhängigkeit vom Typ des eingesetzten modularen Filterelementes (49) steuer- oder regelbar ist.

13. Kabinendach (23) nach einem der vorangehenden Ansprüche, **dadurch gekennzeichnet, dass** die Oberschale (31) gegenüber der Unterschale (32) an einer Seite einen sich über die Breite des Kabinendaches (23) erstreckenden flächigen Überstand (74) aufweist, welcher sich gegenüber der Unterschale (32) durch zumindest zwei beabstandet zueinander angeordnete Profilelemente (73) an dieser abstützt.

14. Kabinendach (23) nach Anspruch 13, **dadurch gekennzeichnet, dass** die Profilelemente (73) einen im Wesentlichen tetraederförmig oder als 3D-Rippen ausgebildet sind.

15. Kabine (13) für ein landwirtschaftliches Arbeitsfahrzeug (1) mit einem Kabinendach (23), **dadurch gekennzeichnet, dass** das Kabinendach (23) nach einem der Ansprüche 1 bis 14 ausgeführt ist.

## Claims

1. A cabin roof (23) of a cabin (13) for an agricultural working vehicle (1), comprising a lower shell (32) and an upper shell (31) between which a circumferential side wall (57) is formed, wherein a section (62) for the intake of air is disposed on one side of the cabin roof (23) downstream of which an air treatment device (33) is positioned in the cabin roof (23), wherein at least one removable cover element (56) is disposed in a section of the circumferential side wall (57) and closes off a receiving section (50) for at least one filter element (49) which extends between the lower shell (32) and the upper shell (31), wherein in the mounted position, the cover element (56) is flush with the circumferential side wall (57) and has fastening sections (59) for fastening to the upper shell (31) which enable the cover element (56) to be swivelled upwards in the direction of the upper shell (31) and fastening elements (60) are provided for releasably connecting the cover element (56) to the lower shell (32), **characterized in that** the cover element (56) is formed with webs (58a, 58b) which are disposed in pairs and which extend into sections of the interior of the cabin roof (23) and which function to attach the at least one filter element (49), wherein the length of the webs (58a, 58b) is determined such that when the air filter (49) is installed in the receiving section (50), the webs (58a, 58b) are supported on the frame of the air filter (49) and attach them to the receiving section (50).

2. The cabin roof (23) according to claim 1, **characterized in that** on the section (62) of the circumferential side wall (57) functioning as the air intake, a filter component (65) positioned outside the cabin (13) can be attached without the need for tools by means of an interlocking connection.

3. The cabin roof (23) according to claim 2, **characterized in that** a receiving element (63) which is open towards the top of the cabin roof is disposed on the section (62), into which receiving element a flange-shaped connecting element (64) disposed on the end of the filter component (65) can be introduced from above in an interlocking manner.

4. The cabin roof (23) according to claim 3, **characterized in that** the connection between the receiving element (63) and the connecting element (64) is configured as a dovetail connection.

5. The cabin roof (23) according to one of claims 2 to 4, **characterized in that** a pivotably disposed roof side element (61) is disposed on the cabin roof (23) in order to secure the interlocking connection.

6. The cabin roof (23) according to one of the preceding claims, **characterized in that** a recess (66) is disposed on the rear side of the cabin roof (23) in the circumferential side wall (57) which can be closed by means of an exchangeable wall insert (67) provided with at least one through opening (68).

7. The cabin roof (23) according to claim 6, **characterized in that** the wall insert (67) is flush with and closes the surface of the circumferential side wall (57).

8. The cabin roof (23) according to claim 6 or claim 7, **characterized in that** the wall insert (67) is releasably connected to the cabin roof (23) in an interlocking and/or friction fitting manner.

9. The cabin roof (23) according to one of the preceding claims, **characterized in that** at least one hollow cylindrical section (69) with a closed curved surface is disposed between the lower shell (32) and the upper shell (31) the open base area (70) of which cylindrical section opening into the lower shell (32) and being capable of being closed off by means of a loudspeaker membrane.

10. The cabin roof (23) according to claim 9, **characterized in that** the volume of the hollow cylindrical section (69) can be changed by means of a volume limiting element.

11. The cabin roof (23) according to one of the preceding claims, **characterized in that** the at least one filter element (49) which can be introduced into the receiving section (50) of the cabin roof (23) is configured as an exchangeable module.

12. The cabin roof (23) according to claim 11, **characterized in that** a separate fan unit (75) is disposed in the cabin roof (23) and can be controlled or regulated as a function of the type of modular filter element (49) which is employed.

13. The cabin roof (23) according to one of the preceding claims, **characterized in that** on one side, the upper shell (31) has a flat overhang (74) which extends over the lower shell (32) over the width of the cabin roof (23) and which is supported with respect to the lower shell (32) by means of at least two profile elements (73) which are disposed at a distance from each other.

14. The cabin roof (23) according to claim 13, **characterized in that** the profile elements (73) are configured in a tetrahedral shape or in the form of 3D ribs.

15. A cabin (13) for an agricultural working vehicle (1) with a cabin roof (23), **characterized in that** the cabin roof (23) is configured in accordance with one of claims 1 to 14.

## Revendications

1. Toit de cabine (23) d'une cabine (13) pour un véhicule de travail agricole (1), incluant une coque inférieure (32) et une coque supérieure (31) entre lesquelles est conçue une paroi latérale périphérique (57), sur un côté du toit de cabine (23) étant disposée une portion (62) pour l'aspiration d'air, en aval de laquelle est disposé un dispositif de traitement d'air (33) disposé dans le toit de cabine (23), dans une portion de la paroi latérale périphérique (57) étant disposé au moins un élément de recouvrement amovible (56) qui obture une portion de réception (50) pour au moins un élément de filtre (49) s'étendant entre la coque inférieure (32) et la coque supérieure (31), en position montée l'élément de recouvrement (56) coïncidant de manière jointive avec la paroi latérale périphérique (57) et comportant, pour le fixer à la coque supérieure (31), des portions de fixation (59) qui permettent de relever l'élément de recouvrement (56) en direction de la coque supérieure (31) et liaison détachable de l'élément de recouvrement (56) avec la coque inférieure (32) étant prévus des éléments de fixation (60), **caractérisé en ce que** l'élément de recouvrement (56) est conçu avec des pattes (58a, 58b) qui s'étendent par portions à l'intérieur du toit de cabine (23) et sont disposées par paires et qui servent à la fixation du au moins un élément de filtre (49), la longueur des pattes (58a, 58b) étant calculée de façon que, lorsque le filtre à air (49) est encastré dans la portion de réception (50), les pattes (58a, 58b) prennent appui sur le bâti du filtre à air (49) et immobilisent celui-ci dans la portion de réception (50).

2. Toit de cabine (23) selon la revendication 1, **caractérisé en ce qu'**un composant de filtre (65) positionné extérieurement à la cabine (13) peut être monté sans outils sur la portion (62) de la paroi latérale périphérique (57) servant à l'aspiration d'air au moyen d'une liaison par conjugaison de formes.

3. Toit de cabine (23) selon la revendication 2, **caractérisé en ce que** sur la portion (62) est disposé un élément récepteur (63) qui est conçu de manière ouverte vers le côté supérieur du toit de cabine et dans lequel peut être introduit par le haut, par complémentarité de formes, un élément de raccordement en forme de bride (64) disposé en bout sur le composant de filtre (65).

4. Toit de cabine (23) selon la revendication 3, **caractérisé en ce que** la liaison entre l'élément récepteur (63) et l'élément de raccordement (64) est conformée en liaison à queue d'aronde.

5. Toit de cabine (23) selon une des revendications 2 à 4, **caractérisé en ce que** pour bloquer la liaison par complémentarité de formes sur le toit de cabine (23) est disposé un élément latéral de toit (61).

6. Toit de cabine (23) selon une des revendications précédentes, **caractérisé en ce que** sur le côté arrière du toit de cabine (23), dans la paroi latérale périphérique (57), est ménagé un évidement (66) qui peut être obturé par l'intermédiaire d'un insert de paroi échangeable (67) pourvu d'au moins une ouverture traversante (68) .

7. Toit de cabine (23) selon la revendication 6, **caractérisé en ce que** l'insert de paroi (67) coïncide de manière jointive avec la surface de la paroi latérale périphérique (57).

8. Toit de cabine (23) selon une des revendications 6 ou 7, **caractérisé en ce que** l'insert de paroi (67) est relié au toit de cabine (23) de manière détachable par complémentarité de formes et/ou de forces.

9. Toit de cabine (23) selon une des revendications précédentes, **caractérisé en ce qu'**entre la coque inférieure (32) et la coque supérieure (31) est disposée au moins une portion cylindrique creuse (69) avec une surface latérale fermée, dont la surface de base (70) de conception ouverte débouchant dans la coque inférieure (32) est obturable par l'intermédiaire d'une membrane de haut-parleur.

10. Toit de cabine (23) selon la revendication 9, **caractérisé en ce que** le volume de la portion cylindrique creuse (69) est modifiable par l'intermédiaire d'un élément de limitation de volume.

11. Toit de cabine (23) selon une des revendications précédentes, **caractérisé en ce que** le au moins un élément de filtre (49) insérable dans la portion de réception (50) du toit de cabine (23) est conformé en module échangeable.

12. Toit de cabine (23) selon la revendication 11, **caractérisé en ce que** dans le toit de cabine (23) est disposée une unité de soufflante séparée (75) qui est commandable ou régulable en fonction du type de l'élément de filtre modulaire (49) mis en œuvre.

13. Toit de cabine (23) selon une des revendications précédentes, **caractérisé en ce que** la coque supérieure (31) comporte par rapport à la coque inférieure (32), sur un côté, un débord plat (74) qui s'étend sur la largeur du toit de cabine (23) et qui, par rapport à la coque inférieure (32), prend appui sur celle-ci par l'intermédiaire d'au moins deux éléments profilés (73) disposés à distance l'un de l'autre.

14. Toit de cabine (23) selon la revendication 13, **caractérisé en ce que** les éléments profilés (73) sont conçus un sensiblement sous forme tétraédrique ou sous la forme de nervures en 3D.

15. Cabine (13) pour un véhicule de travail agricole (1) comprenant un toit de cabine (23), **caractérisée en ce que** le toit de cabine (23) est conçu selon une des revendications 1 à 14.
